# EUROPÄISCHE PATENTANMELDUNG

(11) **EP 3 839 358 A1**
(43) Veröffentlichungstag der Anmeldung: **23.06.2021**
(21) Anmeldenummer: 20405023.1
(22) Anmeldetag: 16.09.2020
(51) Int. Cl.: F24D 3/16, F24D 3/14

(54) **DECKENELEMENT FÜR EINE HEIZ- UND KÜHLDECKE**

(30) Priorität: 18.12.2019 CH 16652019
(71) Anmelder: Barcol-Air Group AG, 8603 Schwerzendbach (CH)
(72) Erfinder: Burger, Thomas, 8610 Uster (CH)
(74) Vertreter: Wagner, Wolfgang Heribert

(57) **Zusammenfassung**

Die Erfindung betrifft ein Deckenelement für eine Heiz- und Kühldecke. Auf einer rechteckigen Deckenplatte (1) ist eine Rohrleitung mit parallelen geraden Rohrabschnitten (2a,b,c) angebracht, welche mit der Oberseite der Deckenplatte (1) verbunden, z.B. verklebt oder verschweisst sind. Jeder der Rohrabschnitte (2a,b,c) trägt einen sich annähernd über seine Länge erstreckenden Aufsatz (4) aus Metall, mit einer rohrartigen Hülse (5), die eine gegen die Deckenplatte (1) hin offene Nut (6) bildet, welche den jeweiligen Rohrabschnitt (2a;b;c) satt aufnimmt, sodass über die ganze Länge eine feste Schnappverbindung zwischen dem Aufsatz (4) und dem Rohrabschnitt (2a;b;c) besteht. Die Hülse (5) trägt an den Rändern nach oben abstehende, etwas nach aussen geneigte parallel verlaufende Längsrippen (7a,b), die der Verstärkung des Wärmeaustauschs der Rohrleitung mit der Umgebungsluft durch Konvektion und mit der Raumdecke durch Konvektion und Strahlung sowie der Versteifung des Aufsatzes (4) dienen. Zusammen mit den Aufsätzen (4) bilden die Rohrabschnitte (2a,b,c) Versteifungsleisten, die einen sichtbaren Durchhang der Deckenplatte (1) in Längsrichtung verhindern.

## Beschreibung

### Technisches Gebiet

Die Erfindung betrifft ein Deckenelement für eine Heiz- und Kühldecke. Solche Deckenelemente werden gewöhnlich mit Abstand unterhalb einer Raumdecke aufgehängt, einzeln oder gruppenweise als Deckensegel oder auch so, dass sie eine geschlossene Zwischendecke bilden. Sie werden zum Heizen und vor allem zum Kühlen von Räumen eingesetzt.

### Stand der Technik

Gattungsgemässe Deckenelemente sind seit langem bekannt. Bei ihnen wird vor allem die Kühlwirkung vorwiegend durch wärmeleitenden Kontakt der ein Heiz- oder Kühlmedium, gewöhnlich eine Kühlflüssigkeit führenden Rohrleitung mit der Deckenplatte erzielt, welche mit dem darunterliegenden Raum überwiegend durch Strahlung Wärme austauscht.

Ein gattungsgemässes Deckenelement ist aus DE 20 2010 010 564 U1 bekannt. Gerade Rohrabschnitte eines mäanderförmigen Rohres, das ein Heiz- oder Kühlmedium führt, tragen jeweils einen Aufsatz, welcher als ebene Platte ausgebildet ist mit einer mittigen Ausbuchtung, welche eine nach unten, also gegen die Deckenplatte hin, offene Nut zur Aufnahme des Rohrabschnitts bildet, die sich gemäss einer bevorzugten Ausführungsform nach oben erweitert, sodass der Aufsatz auf den Rohrabschnitt aufgeschnappt werden kann. Die Platte, welche mit der Oberseite der Deckenplatte verklebt ist, weist zur Versteifung an den Rändern nach oben abgebogene Randstreifen auf. Der Aufsatz bedingt wegen der Platte einen ziemlich grossen Materialaufwand. Ausserdem sind die Randstreifen wegen des grossen Abstands von der Nut thermisch nur schwach mit dem Rohr und somit mit dem Heiz- oder Kühlmedium gekoppelt und tragen kaum zur Heiz- oder Kühlwirkung bei.

Aus EP 2 138 778 A1 ist ein weiteres Deckenelement mit einer ebenen Deckenplatte bekannt, an deren Oberseite ein ein Heiz- oder Kühlmedium führendes mäanderförmiges Rohr mit parallelen geraden Rohrabschnitten angeordnet ist. Für jeden der geraden Rohrabschnitte ist ein Halteelement, vorzugsweise aus Aluminium, vorgesehen, mit einer Platte, die auf der Oberseite der Deckenplatte aufliegt und an ihrer Oberseite eine Führung für den Rohrabschnitt aufweist. Sie bildet eine sich nach unten leicht erweiternde Rinne, in die der Rohrabschnitt eingedrückt werden kann, wobei er leicht deformiert wird. Die Rinne ist beidseits von schräg nach oben abstehenden kurzen Stegen flankiert, welche das Einpressen des Rohrabschnitts erleichtern. Das Deckenelement ist aufwendig und schwer und erfordert viel Material. Die Stege sind nicht geeignet, die thermische Kopplung zwischen dem Heiz- und Kühlmedium und der Raumluft spürbar zu verstärken.

Aus CH 707 080 A2 ist ein weiteres Deckenelement bekannt mit einer ebenen Deckenplatte und einem an deren Oberseite angeordneten mäanderförmigen Rohr mit geraden Rohrabschnitten zur Führung eines Heiz- oder Kühlmediums. Die geraden Rohrabschnitte tragen jeweils einen Aufsatz mit einer Hülse, welche eine den Rohrabschnitt ganz oder teilweise aufnehmende, nach unten offene Nut bildet. Der Aufsatz kann seitliche Fussplatten aufweisen, die beidseits des Rohrabschnittes auf der Oberseite der Deckenplatte aufliegen. Der Rohrabschnitt kann dann in die Nut eingeschnappt sein. Der Aufsatz kann aber auch eine Kappe aufweisen, welche ohne direkten Kontakt zur Deckenplatte auf dem Rohrabschnitt aufsitzt. Er umfasst jeweils einen senkrecht nach oben abstehenden Steg und eine an einem oberen Ende desselben angeordnete zur Deckenplatte parallele Platte, die zur Vergrösserung des Strahlungsaustausches mit einer Betondecke zwecks Verstärkung einer Speicherwirkung derselben dient. Der Aufsatz trägt jedoch kaum zur Verbesserung des Wärmeaustauschs mit der Raumluft bei.

Aus DE 20 2014 103 044 U1 schliesslich ist ein Deckenelement oder Wandelement für eine Halle bekannt. Es umfasst eine Deckenplatte mit Ausbuchtungen von U-förmigem Querschnitt, welche gerade Rohrabschnitte etwa zur Hälfte aufnehmen. Die Rohrabschnitte können jeweils einen Aufsatz aus Blech tragen mit einer Kappe, die einen Teil der Oberseite des Rohres bedeckt und an den Rändern schräg nach oben abstehende Fortsätze trägt. Wegen der Unebenheit der Deckenplatte ist das Deckenelement aus ästhetischen Gründen für kleinere Räume wie etwa Sitzungszimmer nicht geeignet. Da die Rohrabschnitte teilweise in den Ausbuchtungen versenkt sind, können die Aufsätze nur auf aufwendige Weise, etwa durch Kleben, aber nicht durch einfaches Aufschnappen, mit ihnen verbunden sein.

### Darstellung der Erfindung

Der Erfindung liegt vor allem die Aufgabe zugrunde, ein für Sitzungszimmer und ähnliche Räume geeignetes, hohen ästhetischen Anforderungen genügendes Deckenelement zu schaffen, das einen sehr guten Wärmeübergang zwischen einem Heiz- oder Kühlmedium und der Raumluft gewährleistet, einfach aufgebaut ist und leicht und rasch montiert werden kann.

Diese Aufgabe wird durch die Merkmale im Kennzeichen des Anspruch 1 gelöst. Die abhängigen Ansprüche geben vorteilhafte Weiterbildungen der Erfindung an.

Die Erfindung schafft ein ästhetisch befriedigendes Deckenelement mit ebenen Deckenplatten, bei denen ein Durchhängen weitgehend verhindert wird. Der Wärmeaustausch wird durch einen hohen konvektiven Wärmeaustausch zwischen dem Aufsatz und somit der Kühlflüssigkeit einerseits und der Raumluft andererseits verstärkt. Ausserdem wird der Strahlungsaustausch mit der Gebäudedecke erhöht. Die Aufsätze können jeweils durch Aufschnappen auf gerade Rohrabschnitte sehr einfach montiert und, wenn sie nicht zusätzlich mit ihnen verklebt sind, bei Bedarf auch demontiert werden.

### Kurze Beschreibung der Zeichnungen

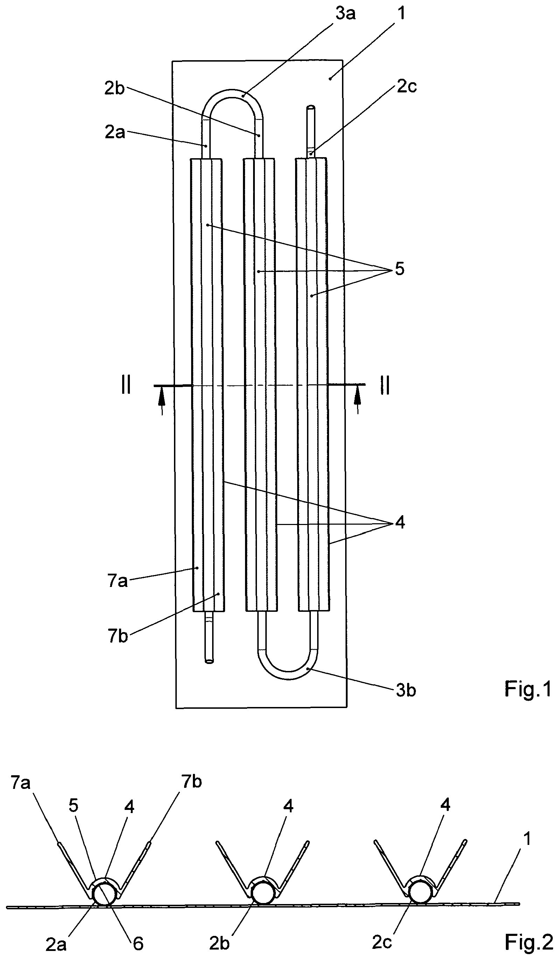

Im folgenden wird die Erfindung anhand von Figuren, welche lediglich ein Ausführungsbeispiel darstellen, näher erläutert. Es zeigen
- Fig. 1: eine Draufsicht auf ein erfindungsgemässes Deckenelement, und
- Fig. 2: vergrössert einen Schnitt längs II-II in Fig. 1.

### Wege zur Ausführung der Erfindung

Das Deckenelement weist eine längliche Deckenplatte 1, im Beispiel eine dünne rechteckige Lochplatte aus Metall, insbesondere Stahlblech, oder Aluminium, auf, mit einer Oberseite, auf welcher direkt oder mit dazwischenliegendem Akustikvlies eine mäanderförmige Rohrleitung, gewöhnlich aus dünnem runden Kupferrohr, aufliegt, mit drei parallelen geraden Rohrabschnitten 2a,b,c, die durch bogenförmige Verbindungsabschnitte 3a,b verbunden sind. Die Rohrabschnitte 2a,b,c sind im wesentlichen über ihre ganze Länge mit der Deckenplatte 1 verbunden, z.B. verklebt oder, falls kein Akustikvlies zwischen der Deckenplatte 1 und der Rohrleitung liegt, auch verschweisst. Die Verbindung kann jeweils durchgehend sein oder sich auf einzelne, z.B. in regelmässigen Abständen aufeinanderfolgende Punkte beschränken. Die Enden der Rohrleitung können jeweils mit der Rohrleitung eines weiteren Deckenelements oder einer Zuleitung oder Ableitung verbunden sein, die eine im Betrieb die Rohrleitung durchströmende Heiz- oder Kühlflüssigkeit, z.B. Wasser, zu- bzw. abführt.

Jeder der geraden Rohrabschnitte 2a;b;c trägt einen Aufsatz 4 aus Metall, vorzugsweise Aluminium, der sich im wesentlichen über die ganze Länge des Rohrabschnitts 2a;b;c erstreckt und mit ihm verbunden ist. Der Aufsatz 4 umfasst eine Hülse 5 zur Aufnahme des jeweiligen Rohrabschnitts 2a;b;c. Sie bildet eine Nut 6 von rundem Querschnitt, welche sich von einer gegen die Oberseite der Deckenplatte 1 weisenden in Längsrichtung durchgehenden schlitzförmigen Öffnung an ihrem unteren Ende nach oben leicht erweitert. Der Rohrabschnitt 2a;b;c liegt in der Nut 6, derart, dass er seitlich und oben an ihrer Wand anliegt. Sein Querschnitt kann dabei leicht elastisch deformiert sein. Die Hülse 5 hat dabei im wesentlichen die Form eines Rohrstücks, das vermittels der schlitzförmigen Öffnung gegen die Deckenplatte hin offen ist.

Wegen der Erweiterung der Nut 6 ist der Aufsatz 4 am Rohrabschnitt 2a;b;c durch eine Schnappverbindung festgehalten. Der Aufsatz 4 kann daher sehr einfach montiert werden, indem er von oben über den Rohrabschnitt 2a;b;c gestülpt wird, der beim Durchtritt durch die schlitzförmige Öffnung leicht seitlich zusammengedrückt wird, um in der Nut 6 wieder einen im wesentlichen runden Querschnitt anzunehmen. Der Aufsatz 4 kann mit dem Rohrabschnitt 2a;b;c jeweils zusätzlich verklebt sein.

An einer Oberseite weist der Aufsatz 4 zwei nach oben abstehende, gegensinnig nach aussen geneigte parallele Längsrippen 7a,b auf, die an der der Nut 6 gegenüberliegenden Oberseite der Hülse 5 an deren Rändern angeformt sind. Sie verstärken den Wärmeaustausch der Rohrabschnitte 2a,b,c der Rohrleitung mit der Luft oberhalb der Deckenplatte 1 und mit der Gebäudedecke und erhöhen so die Wirksamkeit, insbesondere die Kühlleistung des Deckenelements. Es hat sich dafür als günstig erwiesen, dass die Neigung der Längsrippen 7a,b höchstens 45° beträgt. Im Beispiel liegt sie bei ca. 28°. Die Längsrippen 7a,b tragen auch dazu bei, dass der Aufsatz 4 eine hohe Biegesteifigkeit aufweist. Jeder der Rohrabschnitte 2a;b;c bildet daher jeweils zusammen mit dem Aufsatz 4, der fest mit ihm verbunden ist, eine fest mit der Deckenplatte 1 verbundene biegesteife Versteifungsleiste, die sich über einen wesentlichen Teil, in der Regel über mindestens 60%, der Länge der Deckenplatte 1 erstreckt. Die drei parallelen Versteifungsleisten verhindern daher zuverlässig einen den optischen Eindruck störenden sichtbaren Durchhang der länglichen Deckenplatte 1 in Längsrichtung.

Der Aufsatz ist vorzugsweise, wie im Beispiel dargestellt, als um eine vertikale Mittelebene symmetrisches Profil von über seine Länge gleichbleibendem Querschnitt ausgebildet. Dies ist jedoch nicht zwingend. Auch sonst sind viele Abweichungen von der beschriebenen Ausführungsform des Deckenelements möglich, ohne dass der Bereich der Erfindung verlassen würde. So kann etwa der Aufsatz ausschliesslich oder zusätzlich eine mittige Längsrippe aufweisen. Es ist möglich, nur einen Teil der Rohrabschnitte mit einem Aufsatz zu versehen. Auch die Form der Deckenplatte kann von der gezeigten rechteckigen Form abweichen.

### Bezugszeichenliste

- 1: Deckenplatte
- 2a,b,c: gerader Rohrabschnitt
- 3a,b: Verbindungsabschnitt
- 4: Aufsatz
- 5: Hülse
- 6: Nut
- 7a,b: Längsrippen

## Patentansprüche

1. Deckenelement für eine Heiz- und Kühldecke, mit einer ebenen Deckenplatte (1) und einer Rohrleitung, welche mindestens einen sich in eine Längsrichtung erstreckenden geraden Rohrabschnitt (2a, 2b, 2c) aufweist, der einen über seine Länge mit ihm verbundenen Aufsatz (4) trägt mit einer Hülse (5), die an einer Unterseite eine in Längsrichtung durchgehende Nut (6) zur Aufnahme des mindestens einen geraden Rohrabschnitts (2a; 2b; 2c) umgibt und welche sich, ausgehend von einer der Oberseite der Deckenplatte (1) zugewandten schlitzförmigen Öffnung, nach oben erweitert, sodass die Verbindung des Aufsatzes (4) mit dem geraden Rohrabschnitt (2a; 2b; 2c) durch eine Schnappverbindung hergestellt ist sowie mit mindestens einer sich über seine Länge erstreckenden stegförmigen Längsrippe (7a, 7b), welche frei nach oben ragt, **dadurch gekennzeichnet, dass** der mindestens eine gerade Rohrabschnitt (2a; 2b; 2c) jeweils über seine Länge durchgehend mit einer Oberseite der Deckenplatte (1) verbunden ist und die mindestens eine Längsrippe (7a, 7b) an einer der Nut (6) gegenüberliegenden Oberseite der Hülse (5) angeformt ist.

2. Deckenelement nach Anspruch 1, **dadurch gekennzeichnet, dass** die Hülse (5) als vermittels der schlitzförmigen Öffnung gegen die Oberseite der Deckenplatte (1) offenes Rohrstück ausgebildet ist.

3. Deckenelement nach Anspruch 1 oder 2, **dadurch gekennzeichnet, dass** der mindestens eine gerade Rohrabschnitt (2a, 2b, 2c) jeweils über seine Länge mit der Oberseite der Deckenplatte (1) verbunden, insbesondere verklebt oder verschweisst ist.

4. Deckenelement nach einem der Ansprüche 1 bis 3, **dadurch gekennzeichnet, dass** der Aufsatz (4) mehrere parallel verlaufende von der Hülse (5) nach oben abstehende Längsrippen (7a, 7b) aufweist.

5. Deckenelement nach Anspruch 4, **dadurch gekennzeichnet, dass** mindestens zwei gegensinnig nach aussen geneigte seitliche Längsrippen (7a, 7b) vorgesehen sind.

6. Deckenelement nach Anspruch 5, **dadurch gekennzeichnet, dass** die gegensinnig nach aussen geneigten Längsrippen (7a, 7b) an den Rändern der Hülse (5) angeordnet sind.

7. Deckenelement nach Anspruch 5 oder 6, **dadurch gekennzeichnet, dass** die Neigung der gegensinnig nach aussen geneigten Längsrippen (7a, 7b) höchstens 45° beträgt.

8. Deckenelement nach einem der Ansprüche 1 bis 7, **dadurch gekennzeichnet, dass** der Aufsatz (4) als Profil mit über seine Länge konstantem Querschnitt ausgebildet ist.

9. Deckenelement nach einem der Ansprüche 1 bis 8, **dadurch gekennzeichnet, dass** der Aufsatz (4) um eine Mittelebene spiegelsymmetrisch ist.

10. Deckenelement nach einem der Ansprüche 1 bis 9, **dadurch gekennzeichnet, dass** der Aufsatz (4) aus Metall, insbesondere aus Aluminium besteht.

11. Deckenelement nach einem der Ansprüche 1 bis 10, **dadurch gekennzeichnet, dass** die Rohrleitung mäanderförmig ausgebildet ist mit mehreren parallelen geraden Rohrabschnitten (2, 2b, 2c).
